# EUROPEAN PATENT APPLICATION

(11) **EP 0 940 964 A1**
(43) Date of publication of application: **08.09.1999**
(21) Application number: 98921496.0
(22) Date of filing: 27.05.1998
(51) Int. Cl.: H04M 3/42, H04M 3/50, H04L 12/66

(54) **TELEPHONE CALL INDICATOR FOR COMPUTER CONNECTED TO INTERNET**

(30) Priority: 27.05.1997 ES 9701137; 17.04.1998 ES 9800808
(71) Applicant: Lopez Gonzalez, Pilar, 3550 San Juan de Alicante (ES)
(72) Inventor: Lopez Gonzalez, Pilar, 3550 San Juan de Alicante (ES)
(74) Representative: Perez Bonal, Bernardo
(86) International application number: ES9800150
(87) International publication number: WO9854880

(57) **Abstract**

The invention relates to an indicator which is preferably located in the screen of a user's PC and is provided with an image and sound digitizer code which incorporates a personal access code, the telephone number of another user wishing to communicate being reflected on the screen, the warning being optionally reinforced with light and/or acoustic warnings, with the possibility of using a radio central unit priorly notified of said connection to internet so that the first user will be available either to stop the navigation and answer conventionally the call or wait to establish communication at the end of said navigation, so that it will be possible to close the connexion circle by using also the telephone and loudspeaker of the user's telephone.

## Description

### OBJECT OF THE INVENTION

The invention now offered consists of a telephone warning device for PCs virtual or not, belonging to the field of devices for warning a user of telephone calls.

It is an object of the invention that the user's PC shows on the screen the telephone number of the person attempting communication, through a radio exchange previously told of this connection to the Internet so that the first user may choose between terminating surfing and answering the call in a conventional manner, or to await the end of the surfing to establish communication with the incoming call.

Also object of the invention is the use of a image and sound digitalization card with an access code.

Another object of the invention is the incorporation of a conventional microphone for establishing communication of the usual type between combined sets of radio receivers and transmitters to be carried out between the set originating the call and the corresponding elements of the PC.

### BACKGROUND OF THE INVENTION

At the present time the only possibility of discrimination of a second telephone call for a user with the line engaged with a connection governed by a modem, without losing this connection, is to have a digital network, since a ISDN is equipped with a wire for data and another one for voice which are independent of each other.

This solution, which is feasible from a technical point of view, is not so for economic reasons and therefore is limited to certain large corporations.

On the other hand, the devices commonly known as "beepers" have a disadvantage which is that they are only useful when the user wishing to contact the owner of the same is aware of its existence, which is not the case when a telephone call is previously forwarded to an exchange.

Aside from the two-channel solution proposed by the ISDN, the only present solution to the problem of the modem connection interruption when there is a conventional incoming call is to have a second telephone line.

Specialized journals often refer to certain experiences with call discrimination in a single wire, none of which has reached practical application due to the problem which the telephone connection creates for digital communication, reduced recently with the new modems which now admit more than 33.600 baud.

### DESCRIPTION OF THE INVENTION

The invention object of the present memory refers to a telephone call warning device for PCs, virtual or not, which allows a user of a single telephone line with a PC equipped with a modem and a connection to the Internet to be aware of the existence of a call of impossible access due to the line being engaged.

Similar service would be provided in the case of a user with an exchange, in which the simple warning of an incoming call is enough to break the connection to the Internet.

For this purpose of call warning a virtual warning device is proposed which appears on a window on the computer screen, enabled for this, in which the telephone number of the user attempting communication is shown.

As an alternative to this virtual call, the signal received may be converted into an optical or acoustical signal as a function of the conventional means for this which the PC is provided with, for which a real time sound and image digitalization card of those used for watching television or listening to the radio on the PC is enough.

This card receives in addition a personal access code known only to the user so that no-one else may know of the incoming call or the number of the person calling.

The user's calls are previously forwarded to an exchange by a conventional service of the telephone company and the central exchange takes care of decoding.

All the alternatives have in common the means of emitting the signal, by radio waves or through the network, and in view of the call the user may choose to end surfing and answer or to delay the reply.

The virtual call warning device for PC has a built-in modem and an Internet connection as well as a real-time digitizing sound and image card and a signal receiver for radio waves or through the network; it also has available a radio exchange.

Also available are two computer programs which act consecutively which expressly and in accordance with law are not included in this document, although their general stages are identified in order to understand better the location of the devices claimed in this improvement and also in order to facilitate the reproducibility of the invention by technical specialists for future improvements or public information after the phase of its official protection.

From the first program follow at least:
A first step, when the user is connecting to the Internet, which consists of the activation of the call forwarding service to a central computer which receives it.

A second step, in which the modem is instructed to dial the Internet access number avoiding the situation of lack of line.

The second program acts from the user's server, where simultaneously to the confirmation of the call receipt and while the placer of the call decides whether to end it with the message, an email message is generated with an attached file, sound or other, to incorporate to this message to be heard, or in general, received at once or at a later time.

Lastly, it is possible to use the PC with a digitizing card, modem and signal receiver and the conventional microphone which these sets generally contain to establish communication of a conventional nature but between the set originating the call and the aforementioned PC set.

The Web page shows the availability to receive conventional telephone calls and may or not include messages or advertising.

### DESCRIPTION OF THE DRAWINGS

In order to complete the description being given and with the object of facilitating a better and easier understanding of the characteristics of the invention, attached to the present descriptive memory as an integral part of the same is a diagram where, with an illustrative character in no case limiting, the following has been reproduced:

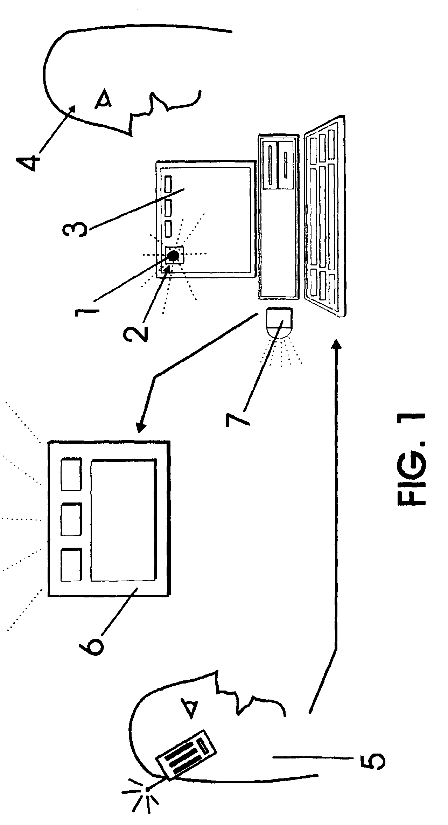

Figure 1.- Shows schematically a user with a PC connected to the Internet and provided with a radio wave receiver, an intermediate radio exchange and another user placing a call to the former one, who receives a warning of this call on the screen with the caller's identity.

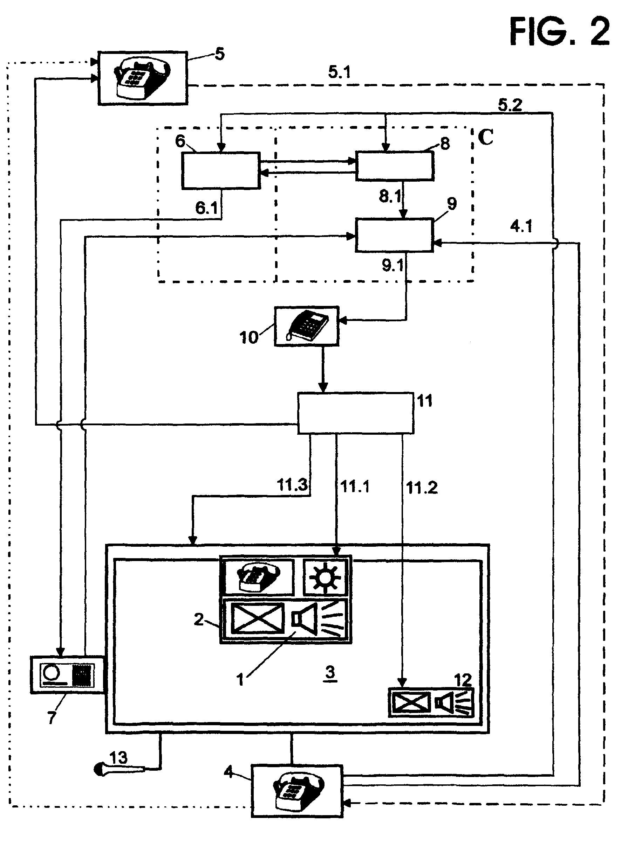

Figure 2.- Shows without considering electrical power and signal connections, the complete diagram for external call receiving while connected to the Internet, showing both alternatives for the call placer schematically, via radio or telephone line, with the deposit of an audible message in the receiver's mailbox, and also showing schematically the three different alternatives for the call receiver, of delaying the reply, direct reply via radio or telephone line, intermittently, as is usual between sets combining radio receivers and transmitters.

### PREFERRED EMBODIMENT OF THE INVENTION

In view of that stated above, the present invention refers to a call warning device, virtual and/or not for PCs, equipped with a modem and an Internet connection as well as a real time sound and image digitalization card, among the call warning devices which stands out for incorporating a radio signal receiver (7) conventional or via the network, which activates a virtual warning device (1), acoustic or luminous, or a combination of these, which appears exclusively on a window (2) on the screen (3) of the first user's PC (4), enabled for this, which is the only place where the telephone number of the second user (5) attempting communication is displayed.

This may be achieved simply by previously forwarding calls to a radio exchange (6) after a prior indication to do so, or by direct indication every time the Internet connection is established, or when the digital card is used making it send a signal indicating the connection to the Internet as this connection takes place, which may last as long as the surfing on the web does, so that the first user (4) who is the only person aware of the call by the second user (5) may choose to answer this call conventionally or await the end of the surfing to establish communication.

An outside telephone call, via the radio signal receiver (7) or the network, activates an acoustic or luminous virtual warning device (1), or a combination of these, in a pre-established window (2) on the screen (3) of the first user's PC, warning of the telephone call from the second user (5) who is attempting communication, after call forwarding by the first user (4) of calls to a central exchange (C) which consists of a radio exchange (6) and a computer (8) or a combination of both, which have received this information of connection either by previous indication or by simultaneous signaling in each Internet connection, in which case the digitizing card is used to send a signal indicating connection to the Internet as this is established, which may last as long as the connection does.

Secondly, and in accordance with the above, the first user (4) of the network, upon knowing of the call placed by the second telephone user (5), depending on personal priorities may choose to answer the call immediately or not.

The sequence followed is:
- External call (5.1) from the second telephone user, via the telephone line, to the user (4) connected to the Internet.
- Forwarding (5.2) of the user (5) call from a specially prepared modem to a central exchange (C) consisting of a radio exchange (6) and a computer (8) or a combination of both, which receives the call either directly or through the radio exchange (6).
- Telephone instruction (8.1) to the modem (9) to dial (9.1) the Internet access number (10).
- Alternative instructions, by radio or through the network, by the radio transmitter-receiver (7) connected or not to the PC of the first user (4).

In accordance with the second step described in the patent, after this:
- The central computer (8) is connected to the Internet and sends a message directly or first checks whether the first user is connected to the Internet.
- The first user (4) is given confirmation (11.1) of the call receipt in the window (2) of the screen (3) and while the second user (5) decides whether to close it with a message,
- An email message (12) is simultaneously, or not, created (11.2) with an attached file with frequencies, sounds, verbal communication, fax, data, images, tones etc., preferably compressed and prepared to include the caller's message so that it is duly received by the person it is intended for,
   - Either at once (acoustically or converted into written text visible on screen, etc.) with the possibility of immediate action without ending the connection (4.1) to the Internet, as in conventional telephone answering devices, or
   - Either at a later time, when the first user (4) ends surfing the network,
   - Or enabling an intermittent connection (11.3) using the PC with a digitizing card, modem (9) and signal receiver (7), and a microphone (13), or using the telephone of the user to establish communication between users (4) and (5).

The web page, which is shown as a start page every time a connection to the Internet is established and which shows the availability status for receiving conventional telephone calls may or may not include messages or advertising, permanent or removable and naturally directed at the network user.

This description is not further extended in the understanding that any expert in the field would have sufficient information to understand the scope of the invention and the advantages deriving from it as well as to be able to reproduce it.

It is also understood that, while the essence of the invention remains the same variations in the materials such as shape, size and arrangement of the elements are susceptible to alteration within the same characterization.

The terms used in the description and its meaning must always be considered as non-limiting.

## Claims

1. Virtual telephone call warning device and/or not for PCs, equipped with a modem and an Internet connection, as well as a real time sound and image digitizing card essentially characterized in that it incorporates a radio signals receiver (7), conventionally or through the network, which activates a virtual warning system (1) and also an acoustic or luminous warning, or a combination thereof, appearing exclusively on a window (2) of the PC screen (3) of a first user (4), the only one so enabled, in which the telephone number of a second user (5) attempting communication is shown, after calls are forwarded by the first user (4) to a radio exchange (6), either by prior indication, by automatic indication whenever an Internet connection is established, or when the digitizing card is employed which sends a signal indicating the Internet connection as it is taking place, which may last as long as the network is being surfed, so that the first user (4) becomes aware of the call from the second user(5) and may choose, depending on personal priorities, whether to end the network connection and answer the call conventionally or to wait until the end of the network use to establish communication.

2. Virtual telephone call warning device and/or not for PCs, characterized in that call forwarding (5.2) of the second user (5) is performed from the specially prepared modem of the first user (4) to a central exchange (C) consisting of both a radio exchange (6) and a computer (8) or a combination thereof, which receives the call either directly or through the radio exchange (6), followed by a telephone instruction (8.1) to the modem (9) to dial (9.1) the Internet access number (10) or the alternative radio instructions to the radio transmitter-receiver (7) connected or not to the PC of user (4).

3. Virtual telephone call warning device and/or not for PCs, as in claim 2, characterized in that the central computer (8) is then connected to the Internet and a message sent immediately, or it is first checked if the user is connected to the Internet at the time.

4. Virtual telephone call warning device and/or not for PCs, as in previous claims, characterized in that while the first user (4) is given confirmation (11.1) of the call receipt on the window (2) on the screen (3) and while the second user (5) decides whether to end the same with a message, an email message (12) is created (11.2) with an attached file in the form of frequencies, sounds, verbal communication, fax, data, images, tones, preferably compressed and prepared to include the call placer's message so that it is duly received by the person it is intended for.

5. Virtual telephone call warning device and/or not for PCs, as in previous claims, characterized in that in addition to the receipt of the message at once (audibly or converted into written text and seen on screen) and the possibility of immediate action without ending the Internet connection (4.1), in a similar way to the conventional telephone answering devices, when the user (4) surfs the net or not, an intermittent connection (11.3) is available using the PC with its digitizing card, modem and signal receiver (7) as well as a microphone (13) to establish communication between the first and the second users, (4) and (5).

6. Virtual telephone call warning device and/or not for PCs, as in previous claims, characterized in that a web page is automatically displayed on the screen at the time of connection to the Internet which shows the availability status for receiving conventional telephone calls.

7. Virtual telephone call warning device and/or not for PCs, as in previous claims, characterized in that the web page includes messages or advertising, permanent or removable and directed towards the first user (4) of the network.

8. Virtual telephone call warning device and/or not for PCs, as in previous claims, characterized in that user (4) may use his or her own telephone, such that a virtual second telephone line is achieved with it.

## Amended claims

### Amended claims under Art. 19.1 PCT

[Received by the International Office on October 27, 1998(27.10.98); claims 1-8 are replaced by the modified claims 1-8(3 pages).]
1. Virtual telephone call warning device for PC connected to the Internet, consisting of a central computer (8), which acting as a conventional Internet server offers a web page, characterized in that the first user (4) introduces identity and telephone data when using the service for the first time, also offering a second web page where the first user (4) is recognized in successive uses of the service and the availability status for receiving conventional telephone calls is shown.
2. Virtual telephone call warning device for PC connected to the Internet as in claim 1 also consisting of a virtual warning system (1), acoustic or luminous, capable of appearing in a window (2) of the screen (2) of the PC of the first user (4) in which is shown the telephone number of a second user (5) trying to establish telephone communication with the first user (4).
3. Virtual telephone call warning device for PC connected to the Internet, as in previous claims, characterized in that incoming calls to the first use (4) are forwarded to a radio exchange (6) or to a central computer (8), either by previous indication by the user to the local exchange, by direct indication from the web page, or by using the modem making it send a signal indicating this connection as the connection to the Internet takes place.
4. Virtual telephone call warning device for PC connected to the Internet, as in claim 2, so that the first user (4) on becoming aware of the second user's (5) call may choose, depending on personal priorities, to continue surfing the net and answer the incoming call conventionally, or to wait to establish communication at the end of this net surfing after receiving the message converted to text through email, or to use a virtual call supported by sending voice packets to the first user's (4) computer, and from there to the second user (5) via the central computer (8).
5. Virtual telephone call warning device for PC connected to the Internet as in claim 2 characterized in that the second user's (5) call is forwarded (5.2) from the specially prepared modem of the first user (4) to a central exchange (C) consisting of a radio exchange (6) and a central computer (8) or a combination thereof, which receives this call and sends a warning through the Internet connection to the user (4) or alternatively to the radio transmitter-receiver (7).
6. Virtual telephone call warning device for PC connected to the Internet as in previous claims characterized in that as the first user (4) is given confirmation (11.1) of the call received in window (2) of the screen (3) and while the second user (5) decides to end the call with a message, an email message (12) is created (11.2) with an attached sound, text or fax file, to be chosen by the user (4).
7. Virtual telephone call warning device for PC connected to the Internet as in claim 2 characterized in that in addition to receiving the message at once (audibly or in written text to be seen on the screen) and having the possibility of acting immediately without ending the connection (4.1) to the Internet, as in conventional telephone answering devices, user (4) being able to surf the net, an intermittent connection (11.3) is available employing the PC with its modem (9) and signal receiver (7) as well as a microphone (13) to establish communication with the second user (4).
8. Virtual telephone call warning device for PC connected to the Internet as in claim 1 characterized in that the web pages include information and advertising, permanent or removable and directed to the first user (4) of the network.

Statement under Art. 19.1 PCT
Three pages of claims are attached which replace those originally presented.

Claims 1 to 8 have been re-edited, after being regrouped and distributed in a new manner, including the modification of the application title recommended by the ISA Office.
